# EUROPÄISCHE PATENTSCHRIFT

(11) **EP 4 038 283 B1**
(45) Veröffentlichungstag und Bekanntmachung des Hinweises auf die Patenterteilung: **23.10.2024**
(21) Anmeldenummer: 20765232.2
(22) Anmeldetag: 27.08.2020
(51) Int. Cl.: F04D 27/00, F04D 27/02, G01H 1/00, F04D 29/42

(54) **VERDICHTER MIT SENSOR ZUR ERKENNUNG VON VERDICHTERPUMPEN**
COMPRESSOR COMPRISING A SENSOR FOR DETECTION IN COMPRESSOR PUMPS
COMPRESSEUR COMPRENANT UN CAPTEUR DE DÉTECTION DANS DES POMPES DE COMPRESSEUR

(30) Priorität: 02.10.2019 DE 102019215224
(43) Veröffentlichungstag der Anmeldung: 10.08.2022
(73) Patentinhaber: Robert Bosch GmbH, 70442 Stuttgart (DE)
(72) Erfinder: FOERSTER, Felix, 75433 Maulbronn (DE)
(86) Internationale Anmeldenummer: PCT/EP2020/073975
(87) Internationale Veröffentlichungsnummer: WO 2021/063604

(56) Entgegenhaltungen:
- DE-A1- 102007 004 347
- DE-A1- 102010 034 266
- US-A1- 2013 309 060

## Beschreibung

Die Erfindung betrifft einen Verdichter. Die Erfindung betrifft des Weiteren ein Verfahren zum Betreiben eines derartigen Verdichters. Die Erfindung betrifft darüber hinaus ein Brennstoffzellensystem mit einem derartigen Verdichter.

### Stand der Technik

Aus der deutschen Offenlegungsschrift DE 10 2012 224 052 A1 ist ein Brennstoffzellensystem mit einer Brennstoffzelle, einem Verdichter, einer Antriebsvorrichtung zum elektrischen Antreiben des Verdichters und mit einem Regelungsgerät bekannt, das zur Erfassung eines Verdichterpumpens eingerichtet ist.

Durch die DE 10 2010 034 266 A1 ist ein Verdichter bekannt, der mit einem Körperschallsensor ausgestattet ist, mit dem im Betrieb des Verdichters Instabilitäten erfasst werden, bevor im Betrieb des Verdichters eine Pumpgrenze erreicht wird.

Durch die DE 10 2007 004 347 A1 ist ebenfalls ein Verdichter bekannt, der mit einem Körperschallsensor ausgestattet ist, mit dem im Betrieb des Verdichters Instabilitäten erfasst werden, bevor im Betrieb des Verdichters eine Pumpengrenze erreicht wird.

Die bekannten Verdichter umfassen zum Beispiel ein Laufrad, das mit Hilfe mindestens eines Lagers drehbar in einem Gehäuse gelagert ist. Das Laufrad wird, zum Beispiel mit Hilfe eines Elektromotors, angetrieben, um mit Hilfe einer geeigneten Beschaufelung auf einer Laufradvorderseite ein zugeführtes Medium, wie Luft, zu verdichten. Beim Verdichten von Luft wird der Verdichter auch als Luftverdichter oder Luftkompressor bezeichnet. Bei den im Betrieb des Verdichters auftretenden Instabilitäten, die an sich unerwünscht sind, handelt es sich um körperschallbeeinflussende Phänomene, die im Betrieb des Verdichters vor Erreichen der Pumpgrenze auftreten. Dabei handelt es sich zum Beispiel um ein umlaufendes Ablösen der Strömung an einer oder mehreren Schaufeln des Verdichters oder um ein unerwünschtes Rückströmen eines zu verdichtenden Mediums in dem Verdichter entgegen einer normalen Strömungsrichtung beim Verdichten des Mediums. Durch die Verwendung des Körperschallsensors kann im Betrieb des Verdichters vorteilhaft ein Überschreiten der Pumpgrenze und ein damit verbundenes Verdichterpumpen sicher verhindert werden. So wird ein pumpgrenznaher Betrieb ermöglicht, und zwar besonders vorteilhaft ohne einen ansonsten benötigten Sicherheitsvorbehalt. Körperschallsensoren an sich sind zum Beispiel aus den deutschen Offenlegungsschriften DE 10 2007 057 136 A1 oder DE 10 2009 027 011 A1 bekannt. In dem beanspruchten Verdichter wird ein an sich bekannter Körperschallsensor vorteilhaft zur Überwachung einer Rotordynamik des Verdichters genutzt, wodurch die Lebensdauer des Verdichters verlängert und zum Beispiel die Früherkennung von Lagerschäden ermöglicht wird.

### Offenbarung der Erfindung

Aufgabe der Erfindung ist es, die Erfassung von Instabilitäten im Betrieb eines Verdichters zu verbessern.

Die Aufgabe ist bei einem Verdichter dadurch gelöst, dass der Körperschallsensor an einer Stelle angebracht ist, an der eine Gehäusewand des Verdichters gezielt geschwächt ist, um ein schwingfähiges System zu schaffen, in das der Körperschallsensor integriert ist. Dadurch kann die Körperschallmessung wirksam vereinfacht werden. So können beispielsweise auch kleine Druckschwankungen, die durch die beschriebenen Instabilitäten hervorgerufen werden, erfasst werden.

Der Körperschallsensor kann außen oder innen am Verdichtergehäuse angebracht sein. Die Anbringung des Körperschallsensors am Verdichtergehäuse liefert den Vorteil, dass Schwingungen, die von Instabilitäten im Betrieb des Verdichters hervorgerufen werden, effektiv erfasst werden können.

Ein bevorzugtes Ausführungsbeispiel des Verdichters ist dadurch gekennzeichnet, dass der Körperschallsensor an einer Gehäusevolute des Verdichters angebracht ist. Diese Anordnung hat sich im Hinblick auf die effektive Erfassung von im Betrieb des Verdichters auftretenden Instabilitäten als besonders vorteilhaft erwiesen.

Ein weiteres bevorzugtes Ausführungsbeispiel des Verdichters ist dadurch gekennzeichnet, dass der Körperschallsensor einem Rotor des Verdichters zugeordnet ist. Der Rotor des Verdichters wird zum Beispiel elektromotorisch angetrieben. Die vorab beschriebenen Instabilitäten im Betrieb des Verdichters werden über das Laufrad auf den Rotor übertragen, der antriebsmäßig mit dem Laufrad verbunden ist. Durch die Zuordnung des Körperschallsensors zu dem Rotor können die vorab beschriebenen Instabilitäten effektiv erfasst werden.

Ein weiteres bevorzugtes Ausführungsbeispiel des Verdichters ist dadurch gekennzeichnet, dass der Körperschallsensor einem Lager des Verdichters zugeordnet ist. So können vorteilhaft Lagerschäden erfasst werden, ohne dass es zu einem unerwünschten Ausfall des Verdichters kommt.

Ein weiteres bevorzugtes Ausführungsbeispiel des Verdichters ist dadurch gekennzeichnet, dass der Körperschallsensor steuerungsmäßig mit einer Steuerung des Verdichters verbunden ist. Die Steuerung ermöglicht es zum Beispiel, die Drehzahl des Verdichters automatisch zu reduzieren, wenn mit dem Körperschallsensor Instabilitäten im Betrieb des Verdichters erfasst werden.

Bei einem Verfahren zum Betreiben eines vorab beschriebenen Verdichters ist die oben angegebene Aufgabe alternativ oder zusätzlich dadurch gelöst, dass der Körperschallsensor mit der Steuerung überwacht wird, wobei eine Drehzahl im Betrieb des Verdichters reduziert wird, sobald mit dem Körperschallsensor erfasst und mit der Steuerung erkannt wird, dass eine definierte Vorpumpgrenze des Verdichters erreicht ist. Die Vorpumpgrenze ist niedriger als die Pumpgrenze. Die Vorpumpgrenze kann vorteilhaft so gewählt werden, dass ein Verdichterkennfeld im Betrieb des Verdichters besser ausgenutzt werden kann.

Die Erfindung betrifft des Weiteren ein Brennstoffzellensystem mit einem vorab beschriebenen Verdichter. Der Verdichter umfasst gemäß einem Ausführungsbeispiel eine Verdichterstufe beziehungsweise ein Verdichterrad. Der Verdichter umfasst gemäß einem weiteren Ausführungsbeispiel mindestens zwei Verdichterstufen, die in Reihe geschaltet sind. Ein Laufrad des Verdichters kann antriebsmäßig mit einem Turbinenrad verbunden sein. Das Brennstoffzellensystem umfasst vorzugsweise mehrere Brennstoffzellen, die jeweils eine Anode und eine Kathode umfassen. Mit dem Verdichter wird der Brennstoffzelle Sauerstoff, zum Beispiel in Form von Luft, als Oxidationsmittel zugeführt.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

### Kurze Beschreibung der Zeichnung

Es zeigen:
Figur 1 einen Verdichter mit einem Gehäuse in einer Seitenansicht;
Figur 2 eine schematische Schnittdarstellung eines Verdichters mit einem Rotor, der durch drei Lager radial und axial drehbar gelagert ist; und
Figur 3 eine schematische Darstellung eines Brennstoffzellensystems mit einem Luftverdichter, wie er in Figur 2 dargestellt ist.

### Beschreibung der Ausführungsbeispiele

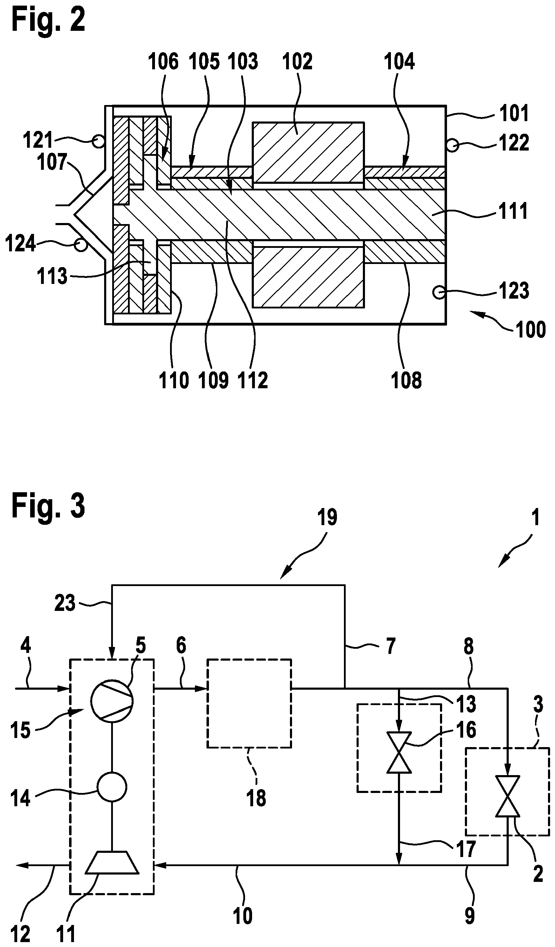

In Figur 3 ist ein Brennstoffzellensystem 1 schematisch dargestellt. Brennstoffzellensysteme an sich sind bekannt, zum Beispiel aus der deutschen Offenlegungsschrift DE 10 2012 224 052 A1. Das Brennstoffzellensystem 1 umfasst eine Brennstoffzelle 3, die nur durch ein gestricheltes Rechteck angedeutet ist. Die Brennstoffzelle 3 umfasst mindestens einen Stack 2, der ersatzweise mit einem Ventilsymbol dargestellt ist.

Durch einen Pfeil 4 ist ein Luftmassenstrom angedeutet, der über eine als Luftverdichter ausgeführte Luftzuführvorrichtung 5 der Brennstoffzelle 3 zugeführt wird. Durch einen Pfeil 6 ist ein verdichteter Luftmassenstrom 6 angedeutet, von dem ein Kühlluftmassenstrom 7 abgezweigt wird. Der Kühlluftmassenstrom 7 ist ebenfalls nur durch einen Pfeil angedeutet und ist Teil eines Kühlluftpfades 19, über welchen dem Luftverdichter 5 über einen Kühllufteintritt 23 Kühlluft zugeführt wird.

Die über den Kühlluftpfad 19 zugeführte Kühlluft dient zum Beispiel zur Kühlung von Luftlagern, mit denen eine Welle des Luftverdichters 5 drehbar gelagert ist. Der Kühlluftmassenstrom 7 stellt einen Verlust im verdichteten Luftmassenstrom 6 dar, da der abgezweigte Kühlluftmassenstrom 7 nicht mehr im Stack 2 der Brennstoffzelle 3 verfügbar ist.

Da der Kühlluftmassenstrom 7 über den Luftverdichter 5 zur internen Kühlung bereitgestellt wird, ist Energie, insbesondere elektrische Energie, notwendig, um ihn zu erzeugen. Diese Energie wirkt sich negativ auf den Gesamtwirkungsgrad einer elektrischen Antriebsmaschine eines Kraftfahrzeugs aus, das über das Brennstoffzellensystem 1 angetrieben wird.

Der verbleibende Luftmassenstrom 6 wird über eine Luftzuführleitung 8 der Brennstoffzelle 3 zugeführt. Die Brennstoffzelle 3 ist eine galvanische Zelle, die chemische Reaktionsenergie eines über eine nicht gezeigte Brennstoffzuführungsleitung zugeführten Brennstoffs und eines Oxidationsmittels in elektrische Energie wandelt.

Das Oxidationsmittel ist die Luft, die über die Luftzuführleitung 8 der Brennstoffzelle 3 zugeführt wird. Der Brennstoff kann vorzugsweise Wasserstoff oder Methan oder Methanol sein. Entsprechend entsteht als Abgas Wasserdampf und Kohlendioxid. Das Abgas wird in Form eines Abgasmassenstroms 10 über eine Abgasleitung 9 abgeführt, wie durch einen Pfeil 10 angedeutet ist.

Der Abgasmassenstrom 10 wird über eine Abgasturbine 11 zu einem Abgasaustritt 12 abgeführt, der durch einen Pfeil angedeutet ist. Der Luftverdichter 5 ist in der Luftzuführleitung 8 angeordnet. Die Abgasturbine 11 ist in der Abgasleitung 9 angeordnet. Der Luftverdichter 5 und die Abgasturbine 11 sind über eine Welle mechanisch verbunden.

Die Welle ist durch einen Elektromotor 14 elektrisch antreibbar. Die Abgasturbine 11 dient der Unterstützung des Elektromotors 14 beim Antreiben des Luftverdichters 5. Der Luftverdichter 5, die Abgasturbine 11, die Welle und der Elektromotor 14 bilden zusammen einen Turboverdichter 15, der auch als Turbomaschine bezeichnet wird.

Das Brennstoffzellensystem 1 umfasst des Weiteren eine Bypassleitung 13, in der ein Bypassventil 16 angeordnet ist. Über die Bypassleitung 13 mit dem Bypassventil 16 kann ein Bypassluftmassenstrom 17 zur Druckabsenkung von der Luftzuführleitung 8 unter Umgehung des Stacks 2 der Brennstoffzelle 3 in die Abgasleitung 9 abgeführt werden. Das ist zum Beispiel vorteilhaft, um eine Druckabsenkung in dem über die Luftzuführleitung 8 der Brennstoffzelle 3 zugeführten Luftmassenstrom zu bewirken.

Das Brennstoffzellensystem 1 umfasst des Weiteren einen Zwischenkühler 18, der durch ein gestricheltes Rechteck angedeutet ist. Der Zwischenkühler 18 dient dazu, den verdichteten Luftmassenstrom 6 zu kühlen, bevor der Kühlluftmassenstrom 7 über den Kühlluftpfad 19 abgezweigt wird.

In Figur 2 ist ein Verdichter 100 eines Brennstoffzellensystems schematisch dargestellt. Der Verdichter 100 umfasst ein Gehäuse 101, in welchem ein Elektromotor 102 angeordnet ist. Der Elektromotor 102 dient zum Antrieb eines Rotors 103 des Verdichters 100.

Der Rotor 103 des Verdichters 100 ist mit Hilfe von zwei Radial-Gaslagern 104, 105 radial in dem Gehäuse 101 gelagert. Zur axialen Lagerung des Rotors 103 dient ein Axial-Gaslager 106.

An dem in Figur 2 linken Ende des Rotors 103 ist ein Verdichterrad 107 angebracht. Das Verdichterrad 107 dient zur Verdichtung von Luft, die in dem Brennstoffzellensystem bereitgestellt wird, wenn das Verdichterrad 107 über den Rotor 103 durch den Elektromotor 102 angetrieben wird.

Die Radial-Gaslager 104, 105; 106 umfassen jeweils einen Gehäusekörper 108, 109; 110. Der Rotor 103 umfasst zwei Rotorabschnitte, die auch als Rotorkörper 111, 112 bezeichnet werden, mit denen der Rotor 103 in den Radial-Gaslagern 104, 105 radial gelagert ist.

Der Rotor 103 umfasst darüber hinaus einen Rotorbund, der auch als Rotorkörper 113 bezeichnet wird. Über den Rotorkörper 113 ist der Rotor 103 durch das Axial-Gaslager 106 axial in dem Gehäuse 101 gelagert. Der Rotorkörper 113 wird auch als Axiallagerscheibe bezeichnet.

In Figur 2 sind symbolisch Körperschallsensoren 121 bis 123 angedeutet. Der Körperschallsensor 121 ist dem Axial-Gaslager 106 zugeordnet. Der Körperschallsensor 122 ist dem Radial-Gaslager 104 zugeordnet. Der Körperschallsensor 123 ist dem Rotor 103 zugeordnet. Der Körperschallsensor 124 ist dem Verdichterrad 107 zugeordnet, das auch als Laufrad 107 bezeichnet wird.

Die Körperschallsensoren 121, 122 und 124 sind außen am Gehäuse 101 des Verdichters 100 angeordnet. Der Körperschallsensor 123 ist innen am Gehäuse 101 des Verdichters 100 angebracht.

Eine in Figur 2 nicht näher bezeichnete Gehäusewand, an welcher mindestens einer der Körperschallsensoren 121 bis 124 angebracht ist, ist erfindungsgemäß gezielt geschwächt ausgeführt, um im Betrieb des Verdichters am Gehäuse Schwingungen zu ermöglichen, wenn im Betrieb des Verdichters Instabilitäten auftreten. Die Schwächung der Gehäusewand wird zum Beispiel einfach dadurch erreicht, dass die Gehäusewand im Bereich der Schwächung gezielt dünner ausgeführt wird als in einem die Schwächung umgebenden Bereich.

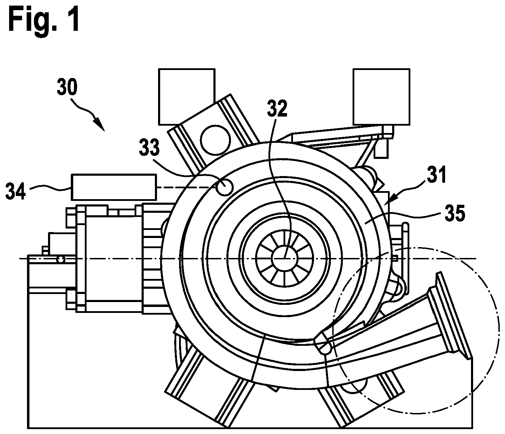

In Figur 1 ist ein Ausführungsbeispiel eines Verdichters in einer Seitenansicht dargestellt. Der Verdichter 30, der auch als Kompressor bezeichnet wird, umfasst ein Gehäuse 31, in welchem eine auch als Rotor bezeichnete Welle 32, beispielsweise eine Kompressorwelle 32, drehbar gelagert ist. Über den Verdichter oder Kompressor 30 wird Luft in einen Brennstoffstapel eines Brennstoffzellensystems gefördert, wie es in Figur 3 dargestellt ist.

Das Gehäuse 31 des Verdichters 30 umfasst eine Gehäusevolute 35. An der Gehäusevolute 35 ist ein Körperschallsensor 33 angebracht. Der Körperschallsensor 33 ist über eine gestrichelt angedeutete Steuerleitung mit einer Steuerung 34 verbunden.

Die Steuerung 34 umfasst eine Steuerelektronik, mit welcher der Körperschallsensor 33 im Betrieb des Verdichters 30 überwacht wird. Die Steuerelektronik verhindert zum Beispiel beim Erreichen einer Vorpumpgrenzerkennung eine weitere Erhöhung der Verdichterdrehzahl.

Alternativ oder zusätzlich kann die Verdichterdrehzahl im Betrieb des Verdichters 30 reduziert werden, wenn die Vorpumpgrenzerkennung anschlägt. Alternativ oder zusätzlich kann über die steuerungsmäßig mit dem Körperschallsensor 33 verbundene Steuerung 34 ein Lagerschaden im Betrieb des Verdichters 30 prognostiziert werden. So kann ein mit dem Brennstoffzellensystem und dem Verdichter 30 ausgestattetes Kraftfahrzeug vorteilhaft in eine Werkstatt gebracht werden, bevor der Verdichter 30 aufgrund des Lagerschadens ausfällt.

## Patentansprüche

1. Verdichter (30;100), der mit einem Körperschallsensor (33;121-123) ausgestattet ist, welcher so ausgebildet ist, dass im Betrieb des Verdichters (30;100) Instabilitäten erfasst werden, bevor im Betrieb des Verdichters (30;100) eine Pumpgrenze erreicht wird, **dadurch gekennzeichnet, dass** der Körperschallsensor (33) an einer Stelle angebracht ist, an der eine Gehäusewand des Verdichters (30) gezielt geschwächt ist, um ein schwingfähiges System zu schaffen, in das der Körperschallsensor (33) integriert ist.

2. Verdichter nach Anspruch 1, **dadurch gekennzeichnet, dass** der Körperschallsensor (33) an einem Gehäuse (101) des Verdichters (30;100) angebracht ist.

3. Verdichter nach einem der vorhergehenden Ansprüche, **dadurch gekennzeichnet, dass** der Körperschallsensor (33) an einer Gehäusevolute (35) des Verdichters (30) angebracht ist.

4. Verdichter nach einem der vorhergehenden Ansprüche, **dadurch gekennzeichnet, dass** der Körperschallsensor (123) einem Rotor (103) des Verdichters (100) zugeordnet ist.

5. Verdichter nach einem der vorhergehenden Ansprüche, **dadurch gekennzeichnet, dass** der Körperschallsensor (122) einem Lager (104) des Verdichters (100) zugeordnet ist.

6. Verdichter nach einem der vorhergehenden Ansprüche, **dadurch gekennzeichnet, dass** der Körperschallsensor (33) steuerungsmäßig mit einer Steuerung (34) des Verdichters (30) verbunden ist.

7. Verfahren zum Betreiben eines Verdichters nach Anspruch 6, **dadurch gekennzeichnet, dass** der Körperschallsensor (33) mit der Steuerung (34) überwacht wird, wobei eine Drehzahl im Betrieb des Verdichters (30) reduziert wird, sobald mit dem Körperschallsensor (33) erfasst und mit der Steuerung (34) erkannt wird, dass eine definierte Vorpumpgrenze des Verdichters (30) erreicht ist.

8. Brennstoffzellensystem mit einem Verdichter (30;100) nach einem der Ansprüche 1 bis 6.

## Claims

1. Compressor (30; 100) which is equipped with a structure-borne sound sensor (33; 121-123), which is designed such that instabilities are detected during operation of the compressor (30; 100), before a surge limit is reached during operation of the compressor (30; 100), **characterized in that** the structure-borne sound sensor (33) is attached at a point at which a housing wall of the compressor (30) is deliberately weakened in order to create a resonant system into which the structure-borne sound sensor (33) is integrated.

2. Compressor according to Claim 1, **characterized in that** the structure-borne sound sensor (33) is attached to a housing (101) of the compressor (30; 100).

3. Compressor according to either of the preceding claims, **characterized in that** the structure-borne sound sensor (33) is attached to a housing volute (35) of the compressor (30).

4. Compressor according to any of the preceding claims, **characterized in that** the structure-borne sound sensor (123) is associated with a rotor (103) of the compressor (100).

5. Compressor according to any of the preceding claims, **characterized in that** the structure-borne sound sensor (122) is associated with a bearing (104) of the compressor (100).

6. Compressor according to any of the preceding claims, **characterized in that** the structure-borne sound sensor (33) is connected in terms of control to a controller (34) of the compressor (30).

7. Method for operating a compressor according to Claim 6, **characterized in that** the structure-borne sound sensor (33) is monitored by way of the controller (34), wherein a rotation speed is reduced during operation of the compressor (30) as soon as the structure-borne sound sensor (33) detects and the controller (34) identifies that a defined preliminary surge limit of the compressor (30) has been reached.

8. Fuel cell system having a compressor (30; 100) according to any of Claims 1 to 6.

## Revendications

1. Compresseur (30 ; 100) équipé d'un capteur de bruit de structure (33 ; 121 - 123) qui est réalisé de façon à détecter des instabilités en cours de fonctionnement du compresseur (30 ; 100) avant qu'une limite de pompage ne soit atteinte en cours de fonctionnement du compresseur (30 ; 100), **caractérisé en ce que** le capteur de bruit de structure (33) est installé à un endroit qui est affaibli de manière ciblée dans une paroi de carter du compresseur (30) afin de créer un système capable d'osciller dans lequel est intégré le capteur de bruit de structure (33).

2. Compresseur selon la revendication 1, **caractérisé en ce que** le capteur de bruit de structure (33) est installé sur un carter (101) du compresseur (30 ; 100).

3. Compresseur selon l'une quelconque des revendications précédentes, **caractérisé en ce que** le capteur de bruit de structure (33) est installé sur une volute de carter (35) du compresseur (30).

4. Compresseur selon l'une quelconque des revendications précédentes, **caractérisé en ce que** le capteur de bruit de structure (123) est associé à un rotor (103) du compresseur (100).

5. Compresseur selon l'une quelconque des revendications précédentes, **caractérisé en ce que** le capteur de bruit de structure (122) est associé à un palier (104) du compresseur (100).

6. Compresseur selon l'une quelconque des revendications précédentes, **caractérisé en ce que** le capteur de bruit de structure (33) est relié en commande à un dispositif de commande (34) du compresseur (30).

7. Procédé permettant de faire fonctionner un compresseur selon la revendication 6, **caractérisé en ce que** le capteur de bruit de structure (33) est surveillé par le dispositif de commande (34), dans lequel une vitesse de rotation est réduite en cours de fonctionnement du compresseur (30) dès que le capteur de bruit de structure (33) détecte et le dispositif de commande (34) reconnaît qu'une limite de pompage préliminaire du compresseur (30) est atteinte.

8. Système de pile à combustible, comprenant un compresseur (30 ; 100) selon l'une quelconque des revendications 1 à 6.
